# EUROPEAN PATENT APPLICATION

(11) **EP 4 007 116 A1**
(43) Date of publication of application: **01.06.2022**
(21) Application number: 20881763.5
(22) Date of filing: 15.10.2020
(51) Int. Cl.: H02J 7/00, H01M 10/44

(54) **CHARGING METHOD AND APPARATUS, COMPUTER DEVICE AND STORAGE MEDIUM**

(30) Priority: 28.10.2019 CN 201911031329
(71) Applicant: GUANGDONG OPPO MOBILE TELECOMMUNICATIONS CORP., LTD., Dongguan, Guangdong 523860 (CN)
(72) Inventor: LI, Zhijie, Dongguan, Guangdong 523860 (CN)
(74) Representative: Penza, Giancarlo
(86) International application number: PCT/CN2020/121078
(87) International publication number: WO 2021/082934

(57) **Abstract**

A charging method and apparatus, a computer device and a storage medium, belonging to the technical field of computers. Said method comprises: when it is detected that constant current charging of a target electronic device ends, controlling the target electronic device to perform first-stage constant voltage charging at a first cutoff voltage (101); and after the first-stage constant voltage charging ends, controlling the target electronic device to perform second-stage constant voltage charging at a second cutoff voltage (102), the second cutoff voltage being less than the first cutoff voltage. Said method can reduce the duration occupied by a constant voltage charging stage.

## Description

### TECHNICAL FIELD

This disclosure relates to the field of computer technologies, and particularly to a charging method and apparatus, a computer device, and a storage medium.

### BACKGROUND

At present, with the development of science and technology, electronic devices such as smart phones have become more and more common in people's daily lives. In practical applications, many electronic devices are equipped with batteries. By charging the batteries in the electronic devices, the electronic devices are provided with electrical energy required for normal operations.

In the related art, the process of charging a battery in the electronic device generally includes a constant voltage charging stage. In the constant voltage charging stage, the charging voltage remains unchanged, and the charging current continues to decrease until it decreases to a certain small amplitude, and then the charging process ends.

However, the charging current in the constant voltage charging stage usually decreases slowly, which causes the constant voltage charging stage to last for a long period of time, and even to account for about 50% of the total charging time of the battery. Therefore, how to reduce the duration of the constant voltage charging stage has become a key issue in reducing the total charging time of the battery.

### SUMMARY

In view of the above, embodiments of the present disclosure provide a charging method and apparatus, a computer device, and a storage medium, by which the duration of the constant voltage charging stage can be shortened.

In a first aspect, a charging method is provided, which includes:
controlling a target electronic device to perform a first stage of constant voltage charging with a first cut-off voltage, in response to detecting that constant current charging of the target electronic device ends; and controlling the target electronic device to perform a second stage of constant voltage charging with a second cut-off voltage, in response to detecting that the first stage of constant voltage charging ends, where the second cut-off voltage is less than the first cut-off voltage.

In a second aspect, a charging apparatus is provided, which includes:
a first control module, configured to control a target electronic device to perform a first stage of constant voltage charging with a first cut-off voltage, when it is detected that constant current charging of the target electronic device ends; and
a second control module, configured to control the target electronic device to perform a second stage of constant voltage charging with a second cut-off voltage, when it is detected that the first stage of constant voltage charging ends, where the second cut-off voltage is less than the first cut-off voltage.

In a third aspect, a computer device is provided, which includes a memory and a processor. The memory stores a computer program. When the computer program is executed by the processor, the charging method according to the first aspect is caused to be implemented.

In a fourth aspect, a computer-readable storage medium is provided, on which a computer program is stored. When the computer program is executed by a processor, the charging method according to the first aspect is caused to be implemented.

The technical solutions provided by the embodiments of the present disclosure bring about at least beneficial effects as follows.

After the constant current charging ends, the target electronic device is controlled to perform a first stage of constant voltage charging with a first cut-off voltage. Then, after the first stage of constant voltage charging ends, the target electronic device is controlled to perform a second stage of constant voltage charging with a second cut-off voltage, where the second cut-off voltage is less than the first cut-off voltage. In the charging method provided by the embodiments of the disclosure, since the constant voltage charging process of the target electronic device is divided into two stages with the charging voltage (that is, the second cut-off voltage) of the second stage of constant voltage charging being relatively small, the charging current decreases fast in the second stage of constant voltage charging. Therefore, the second stage of constant voltage charging lasts for a short period of time. Accordingly, compared with the one-stage constant voltage charging way in which the battery voltage obtained at the end of the constant current charging stage is kept unchanged within the constant voltage charging stage until the charging process stops, the charging method provided in the embodiments of the present disclosure can shorten the duration of the entire constant voltage charging process, thus shortening the total charging time of the battery.

### BRIEF DESCRIPTION OF THE DRAWINGS

FIG. 1 is a flowchart of a charging method provided by the embodiments of the disclosure;
FIG. 2 is a schematic diagram illustrating a charging curve provided by the embodiments of the disclosure;
FIG. 3 is a flowchart for determining whether a first stage of constant voltage charging of a target electronic device ends according to the embodiments of the disclosure;
FIG. 4 is a flowchart for determining whether a second stage of constant voltage charging of the target electronic device ends according to the embodiments of the disclosure;
FIG. 5 is a flowchart of a method for determining the magnitude of a target charging current according to the embodiments of the disclosure;
FIG. 6 is a flowchart of a method for determining a second cut-off voltage and a second cut-off current provided by the embodiments of the disclosure;
FIG. 7 is a schematic diagram of the overall flow of the charging method provided by the embodiments of the disclosure;
FIG. 8 is a block diagram of a charging apparatus provided by the embodiments of the disclosure;
FIG. 9 is a block diagram of another charging apparatus provided by the embodiments of the disclosure; and
FIG. 10 is a block diagram of an electronic device provided by the embodiments of the disclosure.

### DETAILED DESCRIPTION OF PREFERRED EMBODIMENTS

The charging method provided by the embodiments of the present disclosure can be applied to an electronic device. The electronic device may be provided with a battery and a charging control chip. The battery may be a lithium battery. The charging control chip may be configured to control the electronic device to perform the charging process for the battery. Optionally, the electronic device may be a notebook computer, a smart phone, a tablet computer, a wearable device, and the like.

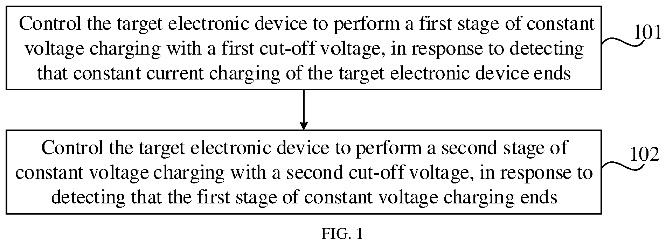

Referring to FIG. 1, a flowchart of a charging method provided by the embodiments of the present disclosure is illustrated. The charging method can be applied to a target electronic device that is an electronic device to be charged. Optionally, the charging method may be performed under the controlling of the charging control chip in the target electronic device. As shown in FIG. 1, the charging method may include operations as follows.

At operation 101, the target electronic device is controlled to perform a first stage of constant voltage charging with a first cut-off voltage, in response to detecting that constant current charging of the target electronic device ends.

In the embodiments of the present disclosure, when the target electronic device detects a charging signal, for example, when the target electronic device detects that it is connected to a power adapter (which can be generally referred to as a charger), the target electronic device may detect whether its own battery voltage is greater than or equal to a first preset voltage threshold. The first preset voltage threshold may be a boot voltage, and the so-called "boot voltage" refers to a minimum battery voltage that can ensure the normal boot of the target electronic device.

When the battery voltage of the target electronic device is greater than or equal to the first preset voltage threshold, the target electronic device can directly enter the constant current charging stage. The constant current charging stage refers to a process of charging the battery with a fixed charging current. In the embodiments of the present disclosure, the target electronic device is charged with a target charging current in the constant current charging stage.

When the battery voltage of the target electronic device is less than the first preset voltage threshold, if a large charging current is adopted for the constant current charging stage, it would cause damage to the battery of the target electronic device and even cause danger to the user during the charging process. In order to avoid this situation, when the battery voltage of the target electronic device is less than the first preset voltage threshold, the target electronic device may enter a pre-charging stage, in which the target electronic device is charged with a small charging current until the battery voltage of the target electronic device reaches the first preset voltage threshold, at that time, the pre-charging stage ends. After the pre-charging stage, the target electronic device can enter the constant current charging stage. As described above, in the embodiments of the present disclosure, the target electronic device is charged with the target charging current in the constant current charging stage.

It should be noted that the magnitude of the target charging current mentioned above may be determined by the target electronic device according to its own battery temperature and the type of the power adapter connected thereto. The method of determining the magnitude of the target charging current is described in detail below.

In practical applications, the target electronic device cannot be always charged in the constant current charging stage, otherwise, the battery voltage of the target electronic device will continuously increase which would cause damage to the battery of the target electronic device. Therefore, in order to ensure the safety of the battery of the target electronic device, optionally, the target electronic device may periodically detect its own battery voltage during the constant current charging process. When it is detected that its own battery voltage is greater than or equal to a first cut-off voltage, the target electronic device needs to stop performing the constant current charging. The first cut-off voltage is greater than a rated voltage of the battery of the target electronic device.

After the constant current charging stage ends, the battery of the target electronic device is generally not fully charged. In order to make the battery of the target electronic device to be fully charged, the target electronic device can be controlled to perform constant voltage charging. The so-called constant voltage charging refers to a process of charging the battery with a fixed charging voltage.

In the embodiments of the present disclosure, the target electronic device can perform the constant voltage charging in two stages. During the first stage of constant voltage charging, the target electronic device is charged with the first cut-off voltage, where the first cut-off voltage is the battery voltage of the target electronic device that is obtained at the end of the constant current charging stage. That is, the first cut-off voltage is a boundary voltage between the constant current charging stage and the constant voltage charging stage. The process of the second stage of constant voltage charging is described in detail below.

It should be noted that, in the embodiments of the present disclosure, the first cut-off voltage may be determined by the target electronic device according to its own battery temperature. Optionally, a first voltage look-up table may be maintained in the target electronic device, and the first voltage look-up table may store correspondences between the battery voltages to be reached at the end of the constant current charging stage and the battery temperatures. The target electronic device may query the first voltage look-up table according to the current battery temperature, to obtain the battery voltage (that is, the first cut-off voltage) to be reached at the end of the constant current charging stage and corresponding to the current battery temperature.

It should also be noted that, in the embodiments of the present disclosure, the first cut-off voltage may be greater than a second preset voltage threshold. The second preset voltage threshold may be set according to the rated voltage of the battery of the target electronic device. In actual applications, the second preset voltage threshold may be 20-30 mV higher than the rated voltage. In other words, the first cut-off voltage may be set to be relatively large. Since the first cut-off voltage is set to be relatively large, the duration of the constant current charging stage of the target electronic device is relatively long; and after the constant current charging stage ends, the battery level of the target electronic device is relatively high, which enables the duration of the subsequent constant voltage charging process to be shortened, thereby shortening the total charging time of the battery of the target electronic device.

At operation 102, the target electronic device is controlled to perform a second stage of constant voltage charging with a second cut-off voltage, in response to detecting that the first stage of constant voltage charging ends.

After the first stage of constant voltage charging ends, the target electronic device may enter the second stage of constant voltage charging, where the charging voltage (that is, the second cut-off voltage) of the second stage of constant voltage charging is less than the charging voltage (that is, the first cut-off voltage) of the first stage of constant voltage charging. It should be noted that the second cut-off voltage may also be determined by the target electronic device according to its own battery temperature. Optionally, a second voltage look-up table may be maintained in the target electronic device, and the second voltage look-up table may store correspondences between the charging voltages of the second stage of constant voltage charging and the battery temperatures. The target electronic device may query the second voltage look-up table according to the current battery temperature, to obtain the charging voltage (that is, the second cut-off voltage) of the second stage of constant voltage charging that corresponds to the current battery temperature.

Since the charging voltage of the second stage of constant voltage charging is relatively small, the charging current decreases relatively fast during the second stage of constant voltage charging. Therefore, the second stage of constant voltage charging lasts for a relatively short period of time. Compared with the one-stage constant voltage charging way in which the battery voltage obtained at the end of the constant current charging stage (that is, the first cut-off voltage described above) is kept unchanged within the constant voltage charging stage until the charging process stops, the two-stage constant voltage charging way provided by the embodiments of the present disclosure enables the duration of the entire constant voltage charging process to be shortened, thereby shortening the total charging time of the battery.

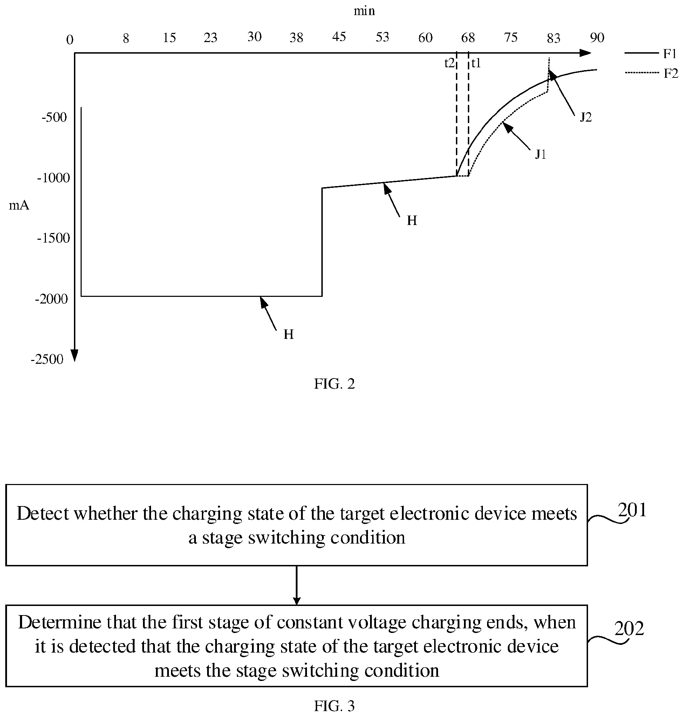

To illustrate this, referring to FIG. 2, a schematic diagram illustrating a charging curve F1 of the traditional one-stage constant voltage charging way and a charging curve F2 of the two-stage constant voltage charging way provided by the embodiments of the present disclosure is shown. In FIG. 2, the horizontal axis represents time in unit of minutes (min), and the vertical axis represents the charging current in unit of mA. The charging curve F1 of the one-stage constant voltage charging way and the charging curve F2 of the two-stage constant voltage charging way have an overlapped portion corresponding to the constant current charging stage H.

As shown in FIG. 2, the two-stage constant voltage charging process provided by the embodiments of the present disclosure includes the first stage of constant voltage charging J1 and the second stage of constant voltage charging J2. The charging current of the second stage of constant voltage charging J2 decreases faster, for reasons as follows. After the first stage of constant voltage charging J1 ends, the battery is generally close to get a full charge, that is, the battery voltage is already relatively high and has a small difference from the first cut-off voltage (the charging voltage of the first stage of constant voltage charging). In addition, the charging current is related to the difference between the charging voltage and the battery voltage, specifically, the greater the difference, the faster the charging current decreases, and the smaller the difference, the slower the charging current decreases. At this time, if it continues to charge the battery with the first cut-off voltage, the charging current decreases slowly. After switching to the second stage of constant voltage charging J2, since the charging voltage (that is, the second cut-off voltage) of the second stage of constant voltage charging J2 is lower than the charging voltage (that is, the first cut-off voltage) of the first stage of constant voltage charging, the difference between the charging voltage of the second stage of constant voltage charging J2 and the battery voltage is relatively large, and accordingly, the charging current decreases relatively fast.

Since the charging current of the second stage of constant voltage charging decreases relatively fast, the duration of the second stage of constant voltage charging J2 is relatively short, which enables the duration of the entire constant voltage charging process to be short. However, in the traditional one-stage constant voltage charging way, the charging current decreases slowly as a whole, and the duration of the entire constant voltage charging process is relatively long.

In addition, referring to FIG. 2, in the charging method provided by the embodiments of the present disclosure, since the first cut-off voltage is set relatively high, the duration t1 of the constant current charging stage is longer than the duration t2 of the traditional constant current charging stage. In this way, after the constant current charging stage ends, the battery level of the target electronic device is relatively high, which enables the duration of the subsequent constant voltage charging process to be shortened, thereby shortening the total charging time of the battery of the target electronic device.

In an optional implementation of the present disclosure, after the second stage of constant voltage charging ends, it can be considered that the battery of the target electronic device has been fully charged. At this time, the target electronic device can be controlled to stop charging.

In the charging method provided by the embodiments of the present disclosure, the target electronic device is controlled to perform the first stage of constant voltage charging with the first cut-off voltage after the constant current charging stage ends. Then, when it is detected that the first stage of constant voltage charging ends, the target electronic device is controlled to perform the second stage of constant voltage charging with the second cut-off voltage, where the second cut-off voltage is less than the first cut-off voltage. In the charging method provided in the embodiments of the present disclosure, since the constant voltage charging process of the target electronic device is divided into two stages with the charging voltage (that is, the second cut-off voltage) of the second stage of constant voltage charging being relatively small, the charging current decreases fast in the second stage of constant voltage charging. Therefore, the second stage of constant voltage charging lasts for a short period of time. Accordingly, compared with the one-stage constant voltage charging way in which the battery voltage obtained at the end of the constant current charging stage is kept unchanged within the constant voltage charging stage until the charging process stops, the charging method provided in the embodiments of the present disclosure can shorten the duration of the entire constant voltage charging process, thus shortening the total charging time of the battery.

Referring to FIG. 3, in the embodiments of the present disclosure, by determining whether a charging state of the target electronic device meets a stage switching condition, it can be determined whether the first stage of constant voltage charging of the target electronic device ends. Optionally, the operation of determining that the first stage of constant voltage charging of the target electronic device ends may include operations as follows.

At operation 201, it is detected whether the charging state of the target electronic device meets a stage switching condition.

The stage switching condition refers to a condition for switching from the first stage of constant voltage charging to the second stage of constant voltage charging. The stage switching condition may be set according to the charging current within the first stage of constant voltage charging and a first cut-off current. Optionally, the stage switching condition may be set according to the relationship between the magnitudes of the charging current and the first cut-off current. Optionally, the stage switching condition may be set according to whether the charging current is less than or equal to the first cut-off current.

The first cut-off current may be determined by the target electronic device according to its own battery temperature. Optionally, a first current look-up table may be maintained in the target electronic device, and the first current look-up table may store correspondences between the cut-off currents corresponding to the stage switching condition and the battery temperatures. The target electronic device may query the first current look-up table according to the current battery temperature, to obtain the first cut-off current corresponding to the current battery temperature.

In the constant voltage charging process, the charging current continues to decrease as the charging time increases. Therefore, in practical applications, the current charging state of the target electronic device may be determined according to the relationship between the magnitudes of the charging current and a certain current threshold.

Based on the foregoing, in a possible implementation, the target electronic device may periodically detect its own charging current, and the target electronic device can determine whether the charging state meets the stage switching conditions by determining whether the charging current is less than or equal to the first cut-off current.

Optionally, in the embodiments of the present disclosure, when the number of times, that the target electronic device detects that its own charging current is less than or equal to the first cut-off current, is greater than or equal to a first number threshold, it may be determined that the charging state of the target electronic device meets the stage switching condition.

The target electronic device does not determine that its own charging state meets the stage switching condition once it detects that the charging current is less than or equal to the first cut-off current. Rather, the target electronic device determines that its own charging state meets the stage switching condition, only when the number of times, that the target electronic device detects that its own charging current is less than or equal to the first cut-off current, is greater than or equal to the first number threshold. Therefore, the influence of accidental factors on determining whether the charging state meets the stage switching condition can be sufficiently reduced, and the accuracy of determining that the charging state meets the stage switching condition can be improved.

For example, in the process of the target electronic device periodically detecting its own charging current, whenever the target electronic device detects that the charging current is less than or equal to the above-mentioned first cut-off current, the target electronic device may increase the number of times of first detections by 1 (the initial value of the number of times of the first detections is 0). When the number of times of the first detections is greater than or equal to the first number threshold, the target electronic device can determine that its own charging state meets the stage switching condition.

At operation 202, when it is detected that the charging state of the target electronic device meets the stage switching condition, it is determined that the first stage of constant voltage charging ends.

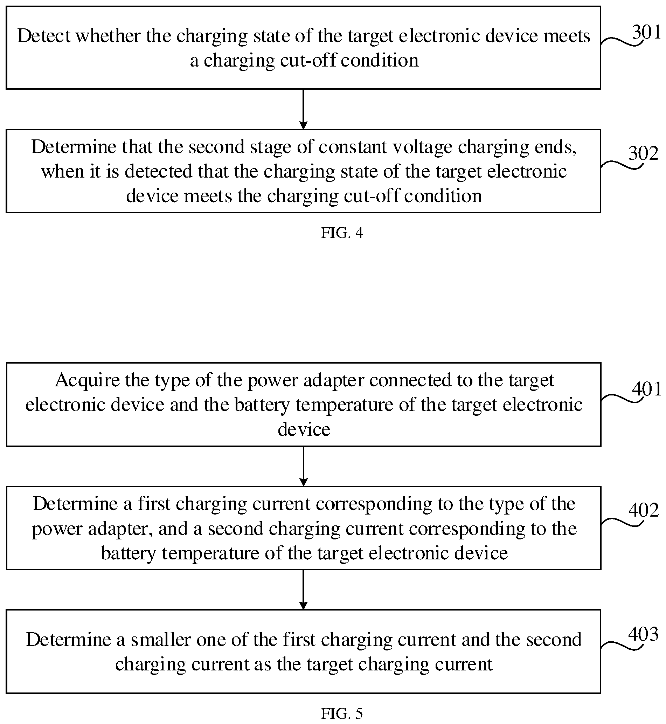

Referring to FIG. 4, in the embodiments of the present disclosure, by determining whether the charging state of the target electronic device meets a charging cut-off condition, it can be determined whether the second stage of constant voltage charging of the target electronic device ends. Optionally, the operation of determining that the second stage of constant voltage charging ends may include operations as follows.

At operation 301, it is detected whether the charging state of the target electronic device meets a charging cut-off condition.

The charging cut-off condition refers to a condition for switching from the second stage of constant voltage charging to stopping charging. The charging cut-off condition may be set according to the charging current and a second cut-off current. Optionally, the charging cut-off condition may be set according to the relationship between the magnitudes of the charging current and the second cut-off current. Optionally, the charging cut-off condition may be set according to whether the charging current within the second stage of constant voltage charging is less than or equal to the second cut-off current. The second cut-off current is less than the first cut-off current.

Similar to the above, the second cut-off current may be determined by the target electronic device according to its own battery temperature. Optionally, a second current look-up table may be maintained in the target electronic device, and the second current look-up table may store correspondences between the cut-off currents corresponding to the charging cut-off condition and the battery temperatures. The target electronic device may query the second current look-up table according to the current battery temperature, to obtain the second cut-off current corresponding to the current battery temperature.

Similar to the contents described for operation 201, in a possible implementation, the target electronic device may periodically detect its own charging current, and the target electronic device may determine whether the charging state meets the charging cut-off condition by determining whether the charging current is less than or equal to the second cut-off current.

Optionally, in the embodiments of the present disclosure, when the number of times, that the charging current of the target electronic device is detected to be less than or equal to the second cut-off current, is greater than or equal to a second number threshold, it may be determined that the charge state of the target electronic device meets the charging cut-off condition.

The target electronic device does not determine that its own charging state meets the charging cut-off condition once it detects that the charging current is less than or equal to the second cut-off current. Rather, the target electronic device determines that its own charging state meets the charging cut-off condition, only when the number of times, that the target electronic device detects that its own charging current is less than or equal to the second cut-off current, is greater than or equal to the second time threshold. Therefore, the influence of accidental factors on determining whether the charging state meets the charging cut-off condition can be sufficiently reduced, and the accuracy of determining that the charging state meets the charging cut-off condition can be improved.

For example, in the process of the target electronic device periodically detecting its own charging current, whenever the target electronic device detects that the charging current is less than or equal to the above-mentioned second cut-off current, the target electronic device may increase the number of times of second detections by 1 (the initial value of the number of times of the second detections is 0). When the number of times of the second detections is greater than or equal to the second number threshold, the target electronic device can determine that its own charging state meets the charging cut-off condition.

In the embodiments of the present disclosure, since the first cut-off current is relatively large, the time required for the charging current to decrease to the first cut-off current is relatively short. Therefore, the duration of the first stage of constant voltage charging is relatively short. After the first stage of constant voltage charging having a short duration ends, the target electronic device can enter the second stage of constant voltage charging in which the charging current decreases relatively fast. Since the charging current decreases fast in the second stage of constant voltage charging, a small second cut-off current may be set for the second stage of constant voltage charging, so that the battery of the target electronic device can be charged more fully without significantly increasing the charging time.

In other words, since the first cut-off current is set to be relatively large, the duration of the first stage of constant voltage charging in which the charging current decreases relatively slowly can be shortened, so that the target electronic device can quickly enter the second stage of constant voltage charging in which the charging current decreases relatively fast. Since the second cut-off current is set to be relatively small, and the charging current of the second stage of constant voltage charging decreases relatively fast, the battery of the target electronic device can be charged more fully without significantly increasing the charging time.

At operation 302, when it is detected that the charging state of the target electronic device meets the charging cut-off condition, it is determined that the second stage of constant voltage charging ends.

As mentioned above, after the second stage of constant voltage charging ends, the target electronic device can stop charging.

In the embodiments of the present disclosure, after the target electronic device stops charging, the target electronic device may be controlled to display information indicating that the battery is fully charged and that the charging of the target electronic device ends.

In the traditional charging technology, once the target electronic device detects that its battery level reaches 100% during the charging, it displays the information indicating that the battery is fully charged. However, at the time instant the battery level reaches 100%, the target electronic device is usually still in the constant voltage charging stage. That is, at the time instant the battery level reaches 100%, the charging of the target electronic device has not stopped yet. In this case, if the user disconnects the power adapter from the electronic device based on the information indicating that the battery is fully charged, the charging of the target electronic device is terminated, causing the battery level of the target electronic device not to be sufficiently full, which in turn affects the standby time of the target electronic device.

In order to make the battery level of the target electronic device be sufficiently full and ensure the standby time of the target electronic device, in the embodiments of the disclosure, the target electronic device may not display the information indicating that the battery is fully charged, once detecting the battery level reaches 100% during the charging. Rather, the target electronic device displays the information indicating that the battery is fully charged, only after the target electronic device stops charging, that is, only after the two stages of constant voltage charging of the target electronic device end. In this way, the user will not be misled to disconnect the power adapter from the target electronic device when the target electronic device has not stopped charging yet. Accordingly, the battery level of the target electronic device can be charged to be sufficient full, and the standby time of the target electronic device can be ensured.

Referring to FIG. 5, on the basis of the above-mentioned embodiments, the embodiments of the present disclosure provide an exemplary method for determining the magnitude of the target charging current. The target charging current refers to the charging current adopted in the constant current charging stage of the target electronic device. The method can be applied to the target electronic device. Optionally, the method may be executed by the charging control chip in the target electronic device. As shown in FIG. 5, the method may include operations as follows.

At operation 401, the type of the power adapter connected to the target electronic device and the battery temperature of the target electronic device are acquired.

In practical applications, the target electronic device may be compatible with multiple types of power adapters. The charging currents that can be output by different types of power adapters are generally different. For example, some types of power adapters can output a charging current of 4A, and some types of power adapters can output a charging current of 6A. Therefore, when determining the charging current for the constant current charging stage of the target electronic device, the type of the power adapter connected to the target electronic device needs to be considered. In the embodiments of the present disclosure, the target electronic device and the power adapter may be connected through a Universal Serial Bus (USB) interface, and the target electronic device may read the type of the power adapter through the USB interface.

In addition, during the constant current charging stage, the battery temperature rises to a certain extent. And an excessively high battery temperature will cause damage to the battery. Therefore, it is necessary to control the battery temperature during the constant current charging stage. Based on this consideration, when determining the charging current for the constant current charging stage of the target electronic device, the battery temperature of the target electronic device also needs to be considered. In the embodiments of the present disclosure, the target electronic device may detect its own battery temperature through a temperature sensor.

At operation 402, a first charging current corresponding to the type of the power adapter is determined, and a second charging current corresponding to the battery temperature of the target electronic device is determined.

Optionally, a third current look-up table and a fourth current look-up table may be maintained in the target electronic device. The third current look-up table may store correspondences between the types of the power adapters and the charging currents, and the fourth current look-up table may store correspondences between the battery temperatures and the charging currents.

After acquiring the type of the power adapter connected to the target electronic device, the target electronic device may query the third current look-up table according to the acquired type of the power adapter, to obtain the first charging current corresponding to the acquired type of the power adapter. Similarly, after acquiring the battery temperature of the target electronic device, the target electronic device may query the fourth current look-up table according to the acquired battery temperature, to obtain the second charging current corresponding to the acquired battery temperature.

At operation 403, a smaller one of the first charging current and the second charging current is determined as the target charging current.

As mentioned above, the target charging current refers to the charging current adopted for the constant current charging stage of the target electronic device. After acquiring the first charging current and the second charging current, the target electronic device can obtain a smaller charging current from the first charging current and the second charging current. For example, if the first charging current is 4A and the second charging current is 9A, the target electronic device can obtain the smaller charging current of 4A that equals to the first charging current. After acquiring the smaller charging current, the target electronic device may determine the smaller charging current as the target charging current. Since the target electronic device uses the smaller charging current of the first charging current and the second charging current as the target charging current, the target charging current can be compatible with both the type of the power adapter and the battery temperature, making the determined target charging current more accurate.

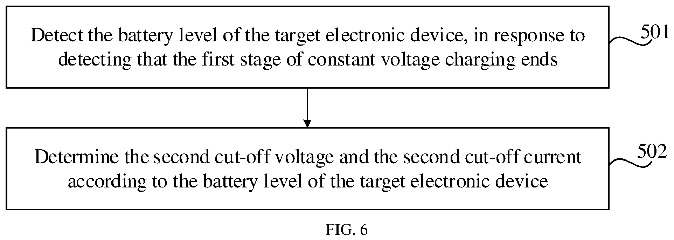

Referring to FIG. 6, on the basis of the above-mentioned embodiments, the embodiments of the present disclosure provide an exemplary method for determining the second cut-off voltage and the second cut-off current. The method can be applied to the target electronic device. Optionally, the method may be executed by the charging control chip in the target electronic device. As shown in FIG. 6, the method may include operations as follows.

At operation 501, the battery level of the target electronic device is detected, in response to detecting that the first stage of constant voltage charging ends.

In practical applications, the battery temperature affects the battery level during the charging process. For example, the battery levels are different, when the battery is charged at the same charging current and different battery temperatures for the same length of time. For another example, the battery levels are also different, when the battery is charged at the same charging voltage and different battery temperatures for the same length of time.

Taking into account the influence of the battery temperature on the battery level, after the first stage of constant voltage charging ends, the battery level of the target electronic device may not a fixed value, but fluctuates according to the battery temperature. In this way, there will be such a situation that the battery level of the target electronic device may not be as full as expected after the first stage of constant voltage charging ends. At this time, it is necessary to charge more power to the battery of the target electronic device through the second stage of constant voltage charging, to make up for the insufficiency of the battery level in the previous charging stage.

In order to achieve this, in the embodiments of the present disclosure, when it is detected that the charging state of the target electronic device meets the stage switching condition, that is, when the target electronic device can be switched from the first stage of constant voltage charging to the second stage of constant voltage charging, the target electronic device can detect its own battery level.

At operation 502, the second cut-off voltage and the second cut-off current are determined according to the battery level of the target electronic device.

After acquiring the battery level of the target electronic device at the end of the first stage of constant voltage charging, the target electronic device can determine the second cut-off voltage and the second cut-off current according to the acquired battery level, so that the insufficiency of the battery level of the previous charging stage can be compensated through the second stage of constant voltage charging in a case where the battery level of the target electronic device is not as full as expected after the first stage of constant voltage charging ends. Optionally, in the embodiments of the present disclosure, the target electronic device may determine the second cut-off voltage and the second cut-off current according to both the battery temperature and the battery level.

It should be understood that, although the various operations in the flowcharts of FIG. 1, FIG. 3,

FIG. 4, and FIG. 5 are shown in sequence as indicated by the arrows, these operations are not necessarily performed in sequence in the order indicated by the arrows. Unless specifically stated in this disclosure, the execution of these operations is not strictly limited in order, and these operations can be executed in other orders. Moreover, at least some of the operations in FIG. 1, FIG. 3, FIG. 4, and FIG. 5 may include multiple sub-operations or multiple stages. These sub-operations or stages are not necessarily executed at the same time instant, but can be executed at different time instants. The sub-operations or stages may not necessarily performed sequentially in order, but may be performed alternately with other operations or at least a part of the sub-operations or stages of other operations.

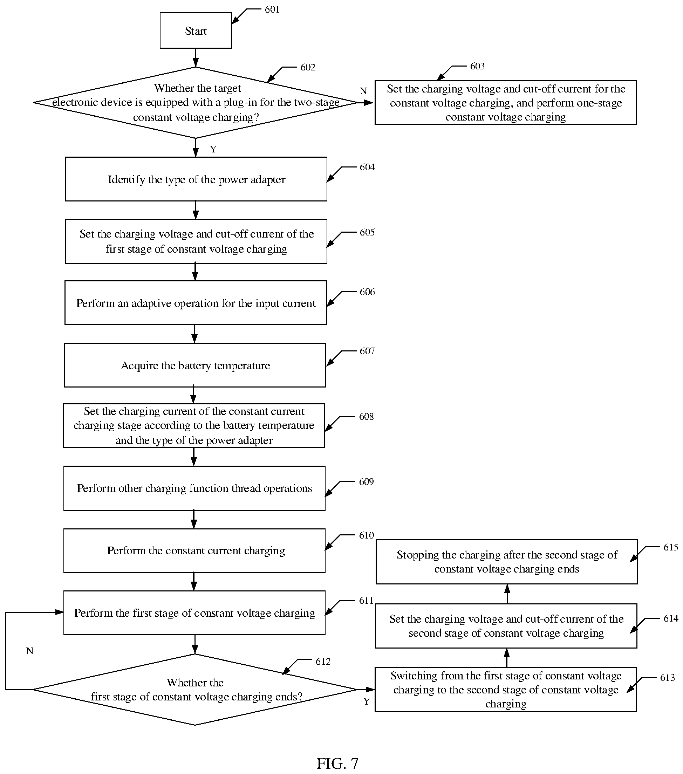

In order to make it easier for the readers to understand the technical solutions provided by the embodiments of the present disclosure, an optional overall process of the technical solutions provided by the embodiments of the present disclosure will be briefly described below. Referring to FIG. 7, the process may include operations as follows.

At operation 601, the process is started. At operation 602, it is determined whether the target electronic device is equipped with a plug-in for the two-stage constant voltage charging; if not, operation 703 is performed; and if yes, operation 704 is performed. At operation 603, the charging voltage and the cut-off current for the constant voltage charging stage are set, and one-stage constant voltage charging is performed. At operation 604, the type of the power adapter is identified. At operation 605, the charging voltage (that is, the first cut-off voltage) of the first stage of constant voltage charging and the cut-off current (that is, the first cut-off current) of the first stage of constant voltage charging are set. At operation 606, an adaptive operation is performed for of the input current. At operation 607, the battery temperature is acquired. At operation 608, the charging current of the constant current charging stage is set according to the battery temperature and the type of the power adapter. At operation 609, other charging function thread operations are performed. At operation 610, the constant current charging is performed. At operation 611, the first stage of constant voltage charging is performed. At operation 612, it is determined whether the first stage of constant voltage charging ends, and if yes, it proceeds to operation 613. At operation 613, it is switched from the first stage of constant voltage charging to the second stage of constant voltage charging. At operation 614, the charging voltage (that is, the second cut-off voltage) of the second stage of constant voltage charging and the cut-off current (that is, the second cut-off current) of the second stage of constant voltage charging are set. At operation 615, after the second stage of constant voltage charging ends, the charging process is stopped.

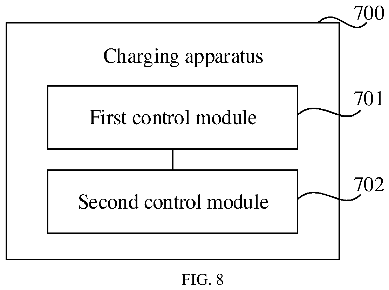

Referring to FIG. 8, a block diagram of a charging apparatus 700 provided by embodiments of the present disclosure is illustrated. The charging apparatus 700 may be configured in the target electronic device described above. As shown in FIG. 8, the charging apparatus 700 may include a first control module 701 and a second control module 702.

The first control module 701 is configured to control the target electronic device to perform a first stage of constant voltage charging with a first cut-off voltage, when it is detected that constant current charging of the target electronic device ends.

The second control module 702 is configured to control the target electronic device to perform a second stage of constant-voltage charging with a second cut-off voltage, when it is detected that the first stage of constant-voltage charging ends, where the second cut-off voltage is less than the first cut-off voltage.

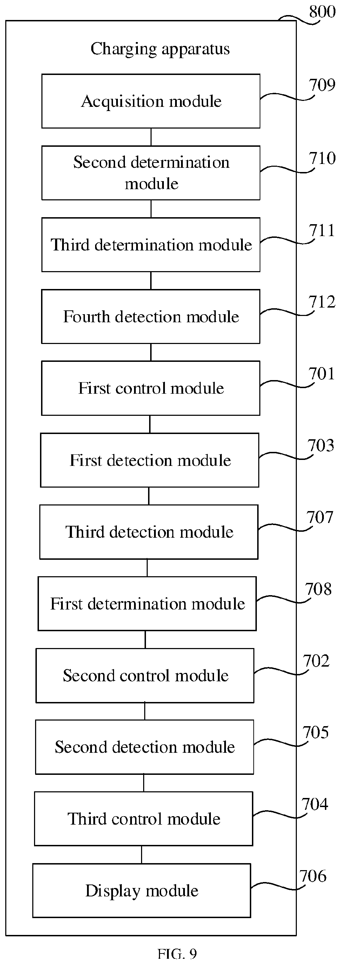

Referring to FIG. 9, the embodiments of the present disclosure also provides another charging apparatus 800. In addition to the modules included in the charging apparatus 700, the charging apparatus 800 may optionally include a first detection module 703, a third control module 704, a second detection module 705, a display module 706, a third detection module 707, a first determination module 708, an acquisition module 709, a second determination module 710, a third determination module 711, and a fourth detection module 712.

The first detection module 703 is configured to detect whether the charging state of the target electronic device meets a stage switching condition, the stage switching condition being set according to a charging current and a first cut-off current; and determine that the first stage of constant voltage charging ends, when it is detected that the charging state of the target electronic device meets the stage switching condition.

In the embodiments of the present disclosure, the first detection module 703 is specifically configured to: periodically detect the charging current of the target electronic device; and determine whether the charging current of the target electronic device is less than or equal to the first cut-off current, to determine whether the charging state of the target electronic device meets the stage switching condition.

In the embodiments of the present disclosure, the first detection module 703 is specifically configured to: determine that the charging state of the target electronic device meets the stage switching condition, when the number of times, that the charging current of the target electronic device is detected to be less than or equal to the first cut-off current, is greater than or equal to a first number threshold.

The third control module 704 is configured to control the target electronic device to stop charging, when it is detected that the second stage of constant voltage charging ends.

The second detection module 705 is configured to detect whether the charging state of the target electronic device meets a charging cut-off condition, the charging cut-off condition being set according to the charging current and a second cut-off current, and the second cut-off current being less than the first cut-off current; and determine that the second stage of constant voltage charging ends, when it is detected that the charging state of the target electronic device meets the charging cut-off condition.

In the embodiments of the present disclosure, the second detection module 705 is specifically configured to: periodically detect the charging current of the target electronic device; and determine whether the charging current of the target electronic device is less than or equal to the second cut-off current, to determine whether the charging state of the target electronic device meets the charging cut-off condition.

In the embodiments of the present disclosure, the second detection module 705 is specifically configured to: determine that the charging state of the target electronic device meets the charging cut-off condition, when the number of times, that the charging current of the target electronic device is detected to be less than or equal to the second cut-off current, is greater than or equal to a second number threshold.

The display module 706 is configured to control the target electronic device to display information indicating that the battery is fully charged and that the charging of the target electronic device ends.

The third detection module 707 is configured to detect a battery level of the target electronic device, when it is detected that the first stage of constant voltage charging ends. The first determination module 708 is configured to determine the second cut-off voltage and the second cut-off current according to the battery level of the target electronic device. The acquisition module 709 is configured to acquire the type of the power adapter connected to the target electronic device and the battery temperature of the target electronic device. The second determination module 710 is configured to: determine a first charging current corresponding to the type of the power adapter, and determine a second charging current corresponding to the battery temperature of the target electronic device. The third determination module 711 is configured to determine a smaller one of the first charging current and the second charging current as the charging current for the constant current charging of the target electronic device. The fourth detection module 712 is configured to: periodically detect the battery voltage of the target electronic device; and determine that the constant current charging of the target electronic device ends, when it is detected that the battery voltage of the target electronic device is greater than or equal to the first cut-off voltage, where the first cut-off voltage is greater than a rated voltage of the battery of the target electronic device.

The charging apparatus provided in the embodiments of the present disclosure can implement the foregoing method embodiments, and its implementation principles and technical effects are similar to those in the method embodiments, which will not be repeated here. Regarding the specific limitation of the charging apparatus, reference may be made to the above limitation of the charging methods, which will not be repeated here. Each module in the above-mentioned charging apparatus can be implemented in whole or in part by software, hardware, or a combination thereof. The foregoing modules may be embedded in the form of hardware into the processor of the computer device or independent of the processor, or may be stored in the memory of the computer device in the form of software, so that the processor can call and execute them to implement the operations corresponding to the foregoing modules.

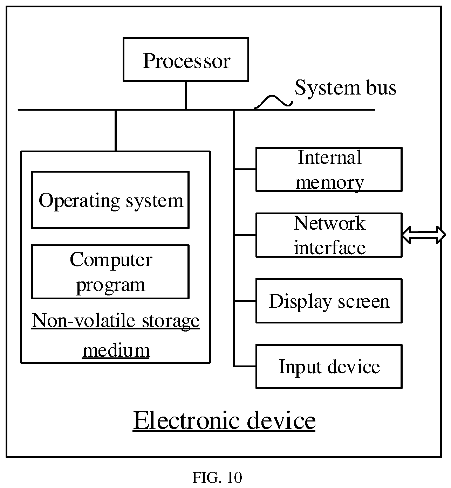

In the embodiments, an electronic device is provided. The electronic device may be a notebook computer, a smart phone, a tablet computer, a wearable device, and the like, and its internal structure may be as shown in FIG. 10. The electronic device includes a processor, a memory, a network interface, a display screen and an input device connected through a system bus. Among them, the processor of the electronic device is used to provide calculation and control capabilities. The memory of the electronic device includes a non-volatile storage medium and an internal memory. The non-volatile storage medium stores an operating system and computer programs. The internal memory provides an environment for the operation of the operating system and computer programs in the non-volatile storage medium. The network interface of the electronic device is used for communication with an external terminal through a network connection. The computer program is executed by the processor to realize the charging method. The display screen of the electronic device may be a liquid crystal display screen or an electronic ink display screen. The input device of the electronic device may be a touch layer covered on the display screen, or a button, trackball or touch pad set on the housing of the electronic device, and it can also be an external keyboard, touchpad, or mouse.

Those skilled in the art can understand that the structure shown in FIG. 10 is only a block diagram illustrating a part of the structures related to the solution of the present disclosure, and does not limiting the electronic device to which the solution of the present disclosure is applied. The specific electronic device may include more or fewer parts than those shown in the figure, or combining some of the parts, or having a different arrangement of the parts.

In the embodiments of the present disclosure, an electronic device is provided, the electronic device includes a memory and a processor, and a computer program is stored in the memory. The processor implements the following operations when executing the computer program:
controlling a target electronic device to perform a first stage of constant voltage charging with a first cut-off voltage, in response to detecting that constant current charging of the target electronic device ends; and controlling the target electronic device to perform a second stage of constant voltage charging with a second cut-off voltage, in response to detecting that the first stage of constant voltage charging ends, where the second cut-off voltage is less than the first cut-off voltage.

In the embodiments of the present disclosure, the processor further implements the following operations when executing the computer program: detecting whether a charging state of the target electronic device meets a stage switching condition, where the stage switching condition is set according to a charging current and a first cut-off current; and determining that the first stage of constant voltage charging ends, in response to detecting that the charging state of the target electronic device meets the stage switching condition.

In the embodiments of the present disclosure, the processor further implements the following operations when executing the computer program: periodically detecting the charging current of the target electronic device; and determining whether the charging current of the target electronic device is less than or equal to the first cut-off current, to determine whether the charging state of the target electronic device meets the stage switching condition.

In the embodiments of the present disclosure, the processor further implements the following operations when executing the computer program: determining that the charging state of the target electronic device meets the stage switching condition, in response to detecting that the number of times, that the charging current of the target electronic device is detected to be less than or equal to the first cut-off current, is greater than or equal to a first number threshold.

In the embodiments of the present disclosure, the processor further implements the following operations when executing the computer program: controlling the target electronic device to stop charging, in response to detecting that the second stage of constant voltage charging ends.

In the embodiments of the present disclosure, the processor further implements the following operations when executing the computer program: detecting whether the charging state of the target electronic device meets a charging cut-off condition, where the charging cut-off condition is set according to the charging current and a second cut-off current, and the second cut-off current is less than the first cut-off current; and determining that the second stage of constant voltage charging ends, in response to detecting that the charging state of the target electronic device meets the charging cut-off condition.

In the embodiments of the present disclosure, the processor further implements the following operations when executing the computer program: periodically detecting the charging current of the target electronic device; and determining whether the charging current of the target electronic device is less than or equal to the second cut-off current, to determine whether the charging state of the target electronic device meets the charging cut-off condition.

In the embodiments of the present disclosure, the processor further implements the following operations when executing the computer program: determining that the charging state of the target electronic device meets the charging cut-off condition, in response to detecting that the number of times, that the charging current of the target electronic device is detected to be less than or equal to the second cut-off current, is greater than or equal to a second number threshold.

In the embodiments of the present disclosure, the processor further implements the following operations when executing the computer program: detecting a battery level of the target electronic device in response to detecting that the first stage of constant voltage charging ends; and determining the second cut-off voltage and the second cut-off current according to the battery level of the target electronic device.

In the embodiments of the present disclosure, the processor further implements the following operations when executing the computer program: controlling the target electronic device to display information indicating that a battery of the target electronic device is fully charged and that the charging of the target electronic device ends.

In the embodiments of the present disclosure, the processor further implements the following operations when executing the computer program: acquiring a type of a power adapter connected to the target electronic device and a battery temperature of the target electronic device; determining a first charging current corresponding to the type of the power adapter, and determining a second charging current corresponding to the battery temperature of the target electronic device; and determining a smaller one of the first charging current and the second charging current as the charging current for the constant current charging of the target electronic device.

In the embodiments of the present disclosure, the processor further implements the following operations when executing the computer program: periodically detecting a battery voltage of the target electronic device; and determining that the constant current charging of the target electronic device ends, in response to detecting that the battery voltage of the target electronic device is greater than or equal to a first cut-off voltage, where the first cut-off voltage is greater than a rated voltage for the battery of the target electronic device.

The implementation principles and technical effects of the computer device provided in the embodiments of the present disclosure are similar to those of the foregoing method embodiments, which will not be repeated here.

In the embodiments of the present disclosure, a computer-readable storage medium is provided, on which a computer program is stored. When the computer program is executed by a processor, the following operations are caused to be implemented:
controlling a target electronic device to perform a first stage of constant voltage charging with a first cut-off voltage, in response to detecting that constant current charging of the target electronic device ends; and controlling the target electronic device to perform a second stage of constant voltage charging with a second cut-off voltage, in response to detecting that the first stage of constant voltage charging ends, where the second cut-off voltage is less than the first cut-off voltage.

In the embodiments of the present disclosure, when the computer program is executed by the processor, the following operations are further implemented: detecting whether a charging state of the target electronic device meets a stage switching condition, where the stage switching condition is set according to a charging current and a first cut-off current; and determining that the first stage of constant voltage charging ends, in response to detecting that the charging state of the target electronic device meets the stage switching condition.

In the embodiments of the present disclosure, when the computer program is executed by the processor, the following operations are further implemented: periodically detecting the charging current of the target electronic device; and determining whether the charging current of the target electronic device is less than or equal to the first cut-off current, to determine whether the charging state of the target electronic device meets the stage switching condition.

In the embodiments of the present disclosure, when the computer program is executed by the processor, the following operations are further implemented: determining that the charging state of the target electronic device meets the stage switching condition, in response to detecting that the number of times, that the charging current of the target electronic device is detected to be less than or equal to the first cut-off current, is greater than or equal to a first number threshold.

In the embodiments, when the computer program is executed by the processor, the following operations are further implemented: controlling the target electronic device to stop charging, in response to detecting that the second stage of constant voltage charging ends.

In the embodiments of the present disclosure, when the computer program is executed by the processor, the following operations are further implemented: detecting whether the charging state of the target electronic device meets a charging cut-off condition, where the charging cut-off condition is set according to the charging current and a second cut-off current, and the second cut-off current is less than the first cut-off current; and determining that the second stage of constant voltage charging ends, in response to detecting that the charging state of the target electronic device meets the charging cut-off condition.

In the embodiments of the present disclosure, when the computer program is executed by the processor, the following operations are further implemented: periodically detecting the charging current of the target electronic device; and determining whether the charging current of the target electronic device is less than or equal to the second cut-off current, to determine whether the charging state of the target electronic device meets the charging cut-off condition.

In the embodiments of the present disclosure, when the computer program is executed by the processor, the following operations are further implemented: determining that the charging state of the target electronic device meets the charging cut-off condition, in response to detecting that the number of times, that the charging current of the target electronic device is detected to be less than or equal to the second cut-off current, is greater than or equal to a second number threshold.

In the embodiments of the present disclosure, when the computer program is executed by the processor, the following operations are further implemented: detecting a battery level of the target electronic device in response to detecting that the first stage of constant voltage charging ends; and determining the second cut-off voltage and the second cut-off current according to the battery level of the target electronic device.

In the embodiments of the present disclosure, when the computer program is executed by the processor, the following operations are further implemented: controlling the target electronic device to display information indicating that a battery of the target electronic device is fully charged and that the charging of the target electronic device ends.

In the embodiments of the present disclosure, when the computer program is executed by the processor, the following operations are further implemented: acquiring a type of a power adapter connected to the target electronic device and a battery temperature of the target electronic device; determining a first charging current corresponding to the type of the power adapter, and determining a second charging current corresponding to the battery temperature of the target electronic device; and determining a smaller one of the first charging current and the second charging current as the charging current for the constant current charging of the target electronic device.

In the embodiments of the present disclosure, when the computer program is executed by the processor, the following operations are further implemented: periodically detecting a battery voltage of the target electronic device; and determining that the constant current charging of the target electronic device ends, in response to detecting that the battery voltage of the target electronic device is greater than or equal to a first cut-off voltage, where the first cut-off voltage is greater than a rated voltage for the battery of the target electronic device.

The implementation principles and technical effects of the computer-readable storage medium provided in the embodiments are similar to those in the foregoing method embodiments, which will not be repeated here.

A person of ordinary skill in the art can understand that all or part of the processes in the above-mentioned method embodiments can be implemented by instructing relevant hardware through a computer program. The computer program can be stored in a non-volatile computer readable storage medium. When the computer program is executed, the process of the above-mentioned method embodiments may be implemented. The memory, storage, database or other media referred in the embodiments provided by the disclosure may include non-volatile and/or volatile memories. The non-volatile memory may include read only memory (ROM), programmable ROM (PROM), electrically programmable ROM (EPROM), electrically erasable programmable ROM (EEPROM), or flash memory. The volatile memory may include random access memory (RAM) or external cache memory. As an illustration and not a limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), Synchlink DRAM (SLDRAM), Rambus direct RAM (RDRAM), direct Rambus dynamic RAM (DRDRAM), and Rambus dynamic RAM (RDRAM), etc.

The technical features of the above-mentioned embodiments can be combined arbitrarily. In order to make the description concise, not all possible combinations of the various technical features in the above-mentioned embodiments are described. However, as long as there is no contradiction in the combination of these technical features, they should be considered as falling into the scope of this specification.

The above-mentioned embodiments only illustrate several implementations of the present disclosure, and the description thereof is relatively specific and detailed, but they should not be understood as limiting the scope of the disclosure. It should be noted that, several modifications and variants can be made by those of ordinary skill in the art without departing from the concept of the disclosure, and they all fall within the scope of protection of the disclosure. Therefore, the scope of protection of the disclosure shall be subject to the appended claims.

## Claims

1. A charging method, comprising:
controlling a target electronic device to perform a first stage of constant voltage charging with a first cut-off voltage, in response to detecting that constant current charging of the target electronic device ends; and
controlling the target electronic device to perform a second stage of constant voltage charging with a second cut-off voltage, in response to detecting that the first stage of constant voltage charging ends;
wherein the second cut-off voltage is less than the first cut-off voltage.

2. The method as claimed in claim 1, wherein before the target electronic device is controlled to perform the second stage of constant voltage charging with the second cut-off voltage in response to detecting that the first stage of constant voltage charging ends, the method further comprises:
detecting whether a charging state of the target electronic device meets a stage switching condition, wherein the stage switching condition is set according to a charging current and a first cut-off current; and
determining that the first stage of constant voltage charging ends, in response to detecting that the charging state of the target electronic device meets the stage switching condition.

3. The method as claimed in claim 2, wherein the detecting whether a charging state of the target electronic device meets a stage switching condition, comprises:
periodically detecting the charging current of the target electronic device; and
determining whether the charging current of the target electronic device is less than or equal to the first cut-off current, to determine whether the charging state of the target electronic device meets the stage switching condition.

4. The method as claimed in claim 3, wherein the determining whether the charging current of the target electronic device is less than or equal to the first cut-off current, to determine whether the charging state of the target electronic device meets the stage switching condition, comprises:
determining that the charging state of the target electronic device meets the stage switching condition, in response to detecting that the number of times, that the charging current of the target electronic device is detected to be less than or equal to the first cut-off current, is greater than or equal to a first number threshold.

5. The method as claimed in claim 2, wherein after the target electronic device is controlled to perform the second stage of constant voltage charging with the second cut-off voltage, the method further comprises:
controlling the target electronic device to stop charging, in response to detecting that the second stage of constant voltage charging ends.

6. The method as claimed in claim 5, wherein before the target electronic device is controlled to stop charging in response to detecting that the second stage of constant voltage charging ends, the method further comprises:
detecting whether the charging state of the target electronic device meets a charging cut-off condition, wherein the charging cut-off condition is set according to the charging current and a second cut-off current, and the second cut-off current is less than the first cut-off current; and
determining that the second stage of constant voltage charging ends, in response to detecting that the charging state of the target electronic device meets the charging cut-off condition.

7. The method as claimed in claim 6, wherein the detecting whether the charging state of the target electronic device meets a charging cut-off condition, comprises:
periodically detecting the charging current of the target electronic device; and
determining whether the charging current of the target electronic device is less than or equal to the second cut-off current, to determine whether the charging state of the target electronic device meets the charging cut-off condition.

8. The method as claimed in claim 7, wherein the determining whether the charging current of the target electronic device is less than or equal to the second cut-off current, to determine whether the charging state of the target electronic device meets the charging cut-off condition, comprises:
determining that the charging state of the target electronic device meets the charging cut-off condition, in response to detecting that the number of times, that the charging current of the target electronic device is detected to be less than or equal to the second cut-off current, is greater than or equal to a second number threshold.

9. The method as claimed in claim 6, further comprising:
detecting a battery level of the target electronic device, in response to detecting that the first stage of constant voltage charging ends; and
determining the second cut-off voltage and the second cut-off current, according to the battery level of the target electronic device.

10. The method as claimed in claim 5, wherein after the target electronic device is controlled to stop charging, the method further comprises:
controlling the target electronic device to display information indicating that a battery is fully charged and that the charging of the target electronic device ends.

11. The method as claimed in any one of claims 1 to 10, wherein before the target electronic device is controlled to perform the first stage of constant voltage charging with the first cut-off voltage in response to detecting that constant current charging of the target electronic device ends, the method further comprises:
acquiring a type of a power adapter connected to the target electronic device, and acquiring a battery temperature of the target electronic device;
determining a first charging current corresponding to the type of the power adapter, and determining a second charging current corresponding to the battery temperature of the target electronic device; and
determining a smaller one of the first charging current and the second charging current, as a charging current for the constant current charging of the target electronic device.

12. The method as claimed in any one of claims 1 to 10, wherein before the target electronic device is controlled to perform the first stage of constant voltage charging with the first cut-off voltage in response to detecting that constant current charging of the target electronic device ends, the method further comprises:
periodically detecting a battery voltage of the target electronic device; and
determining that the constant current charging of the target electronic device ends, in response to detecting that the battery voltage of the target electronic device is greater than or equal to the first cut-off voltage, wherein the first cut-off voltage is greater than a rated voltage for a battery of the target electronic device.

13. A charging apparatus, comprising:
a first control module, configured to control a target electronic device to perform a first stage of constant voltage charging with a first cut-off voltage, when it is detected that constant current charging of the target electronic device ends; and
a second control module, configured to control the target electronic device to perform a second stage of constant voltage charging with a second cut-off voltage, when it is detected that the first stage of constant voltage charging ends;
wherein the second cut-off voltage is less than the first cut-off voltage.

14. A computer device, comprising a memory and a processor, wherein the memory stores a computer program, and when the computer program is executed by the processor, the charging method as claimed in any one of claims 1 to 12 is caused to be implemented.

15. A computer-readable storage medium, storing a computer program thereon, wherein when the computer program is executed by a processor, the charging method as claimed in any one of claims 1 to 12 is caused to be implemented.
